(19) Europäisches Patentamt
European Patent Office
Office européen des brevets

(11) **EP 3 224 710 B1**

(12) **FASCICULE DE BREVET EUROPEEN**

(45) Date de publication et mention de la délivrance du brevet:
**30.09.2020 Bulletin 2020/40**

(21) Numéro de dépôt: **15817956.4**

(22) Date de dépôt: **24.11.2015**

(51) Int Cl.:
*A63F 13/355* (2014.01)    *G06F 9/451* (2018.01)
*H04N 21/431* (2011.01)    *H04N 21/61* (2011.01)
*H04N 21/81* (2011.01)

(86) Numéro de dépôt international:
**PCT/FR2015/053199**

(87) Numéro de publication internationale:
**WO 2016/083731 (02.06.2016 Gazette 2016/22)**

(54) **PROCEDE ET DISPOSITIF D'INTERACTION D'UN TERMINAL CLIENT AVEC UNE APPLICATION EXECUTEE PAR UN EQUIPEMENT, ET TERMINAL L'UTILISANT**

VERFAHREN UND VORRICHTUNG ZUR INTERAKTION EINES CLIENT-ENDGERÄTS MIT EINER VON EINEM AUSRÜSTUNGSTEIL AUSGEFÜHRTEN ANWENDUNG UND ENDGERÄT MIT VERWENDUNG DAVON

METHOD AND DEVICE FOR INTERACTION OF A CLIENT TERMINAL WITH AN APPLICATION EXECUTED BY A PIECE OF EQUIPMENT, AND TERMINAL USING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2014 FR 1461604**

(43) Date de publication de la demande:
**04.10.2017 Bulletin 2017/40**

(73) Titulaire: **ORANGE**
**75015 Paris (FR)**

(72) Inventeurs:
• **BAUMANN, Maximilien**
**78180 Montigny Le Bretonneux (FR)**
• **LACHARME, Sandrine**
**22300 Lannion (FR)**

(56) Documents cités:
WO-A2-2013/140334    US-A1- 2009 282 359
US-A1- 2011 314 093    US-A1- 2012 011 445
US-B1- 8 774 536

• **Anonymous: "DPI and Device-Independent Pixels", , 20 juin 2012 (2012-06-20), XP055161770, Extrait de l'Internet: URL:http://web.archive.org/web/20120620211154/http://msdn.microsoft.com/en-us/library/windows/desktop/ff684173(d=printer,v=vs.85).aspx [extrait le 2015-01-13]**
• **"Citrix Receiver for HTML5 1.4", , 25 septembre 2014 (2014-09-25), XP055183688, http://support.citrix.com/proddocs/topic/receiver-html5-14/receiver-html5-version-wrapper.html Extrait de l'Internet: URL:http://citrix.edocspdf.com/media/output/en.receiver-html5-14.receiver-html5-version-wrapper.pdf [extrait le 2015-04-16]**
• **CHUAH SEONG-PING ET AL: "Cloud gaming: a green solution to massive multiplayer online games", IEEE WIRELESS COMMUNICATIONS, IEEE SERVICE CENTER, PISCATAWAY, NJ, US, vol. 21, no. 4, 1 août 2014 (2014-08-01), pages 78-87, XP011557564, ISSN: 1536-1284, DOI: 10.1109/MWC.2014.6882299 [extrait le 2014-08-22]**
• **KYOUNG ILL KIM: "Cloud-Based Gaming Service Platform Supporting Multiple Devices", ETRI JOURNAL, vol. 35, no. 6, 2 décembre 2013 (2013-12-02), pages 960-968, XP055182937, ISSN: 1225-6463, DOI: 10.4218/etrij.13.2013.0076**

**Description**

L'invention concerne un procédé d'interaction avec une application exécutée par un équipement distinct d'un terminal client mettant en œuvre le procédé d'interaction. En particulier le procédé d'interaction est un procédé d'interaction d'un terminal client avec une application exécutée à distance. L'application exécutée à distance est notamment un jeu vidéo diffusée en utilisant, par exemple, un protocole de communication WebRTC.

Historiquement, les jeux vidéo étaient enregistrés sur des supports (DVD, cartouches...) vendus aux utilisateurs qui les inséraient dans leur terminal de jeux (ordinateurs, consoles...) local et interagissaient localement au moyen de manettes de jeux, voir du clavier et/ou de la souris de l'ordinateur...

Avec la dématérialisation, les utilisateurs récupéraient leur jeux non plus pas achat de support mais par téléchargement à partir de site de vente distant. Les jeux restaient encore exécutés localement.

Progressivement, avec l'apparition des jeux en ligne, certains éléments des jeux ont été déporté dans le réseau de communication, jusqu'à l'exécution du jeu lui-même. Il s'est alors posé le problème de l'interaction local avec un jeu exécuté à distance, notamment parce que la position de la souris, du personnage du jeu... sur l'écran local ne correspondaient pas à celle du jeu dans le réseau. Cela est notamment dû à des différences de résolution entre l'écran local et le jeu exécuté dans le réseau, à la position et/ou à la taille de la fenêtre d'affichage sur l'écran local...

Jusqu'à présent, cette problématique a été solutionnée en transmettant à l'équipement exécutant le jeu l'image incluant l'interaction, c'est-à-dire l'image affichée sur l'écran local comportant non seulement l'image du jeu mais aussi l'image de la souris.

Les documents US 8774536 B1 (JIA WEI [US] ET AL - 8 juillet 2014), US 2012/011445 A1 (GILBOA ARNON [IL] - 12 janvier 2012) et US 2011/314093 A1 (SHEU PHILIP [US] ET AL - 22 décembre 2011) représentent des exemples de l'art antérieur concernant l'adaptation de positions d'interaction dans des applications exécutées à distance.

Un des buts de la présente invention est d'apporter des améliorations par rapport à l'état de la technique.

Un objet de l'invention est un procédé d'interaction d'un terminal client avec une application, exécutée par un équipement, fournissant un flux vidéo affiché en utilisant une résolution client adaptée par un terminal client distinct de l'équipement, le procédé d'interaction étant mis en œuvre par le terminal client et comportant une transmission, par le terminal client à l'équipement, d'une information de position adaptée comme paramètre d'entrée de position d'interaction de l'application, l'information de position adaptée étant fonction :

- d'une position client d'une interface positionnelle par rapport à une image du flux vidéo affiché par le terminal client en utilisant la résolution client adaptée,
- et proportionnelle au rapport entre une résolution de l'équipement et la résolution client adaptée.

Ainsi, les erreurs d'interaction lors de l'exécution distante d'une application sont évitées tout en limitant la charge de réseau et les coûts de calcul, et en conservant le caractère temps réel.

Avantageusement, le procédé comporte une adaptation de la position client de l'interface positionnelle proportionnellement au rapport entre la résolution de l'équipement et la résolution client adaptée.

Avantageusement, le procédé d'interaction comporte une récupération de la résolution client adaptée, la résolution client adaptée étant utilisée par le terminal client comme balise vidéo d'affichage.

Ainsi, le coût de calcul est partagé entre l'affichage et l'interaction, permettant une réduction globale du coût de calcul client.

Avantageusement, la résolution client adaptée est fonction d'une résolution équipement, la résolution équipement étant une résolution d'un équipement exécutant l'application et fournissant un flux vidéo résultant, d'une taille d'une fenêtre d'affichage du flux vidéo et d'un paramètre de précision, la résolution client adaptée ayant une même relation que la résolution équipement à la taille de la fenêtre d'affichage dans laquelle le flux vidéo est affiché par un terminal.

Ainsi, l'adaptation de l'interaction tient compte de la nécessité d'adaptation de l'affichage local. En particulier, le fait que l'affichage d'un flux vidéo temps réel peut être redimensionné tout en conservant le caractère temps réel, sans déformation et sans perte de qualité lors de l'affichage de la vidéo portée par le flux vidéo. Le paramètre de précision permet notamment de conserver le radio de la vidéo d'origine 4 :3, 16 :9, etc.

Avantageusement, l'information de position adaptée est fonction, en outre, de la position d'une fenêtre d'affichage client relativement à un écran d'un terminal client affichant la fenêtre d'affichage client.

Ainsi, l'adaptation de la position tient compte du fait que la position de l'interaction est décalée lorsque l'application n'est pas affichée sur la totalité de l'écran local.

Avantageusement, chaque dimension de la position adaptée est décalée positivement en fonction d'une dimension correspondante la position de la fenêtre d'affichage client multipliée une dimension correspondante de la position client multipliée par la dimension correspondante de la résolution équipement divisée par la résolution client adaptée.

Avantageusement, l'image fournie par l'exécution de l'application est fournie dans un flux vidéo diffusée dans une session de communication Web temps réel.

Avantageusement, le procédé d'interaction est mis en œuvre localement, lorsque l'application est exécutée à distance.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif faisant partie d'un terminal et étant conçus pour commander l'exécution des différentes étapes de ce procédé.

L'invention vise donc aussi un programme comprenant des instructions de code de programme pour l'exécution des étapes du procédé d'interaction selon l'une quelconque des revendications précédentes lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un autre objet de l'invention est un dispositif d'interaction d'un terminal client avec un équipement exécutant une application et fournissant un flux vidéo affiché en utilisant une résolution client adaptée par le terminal client distinct de l'équipement, le dispositif d'interaction comportant un transmetteur, vers l'équipement, d'une information de position adaptée comme paramètre d'entrée de position d'interaction de l'application, l'information de position adaptée étant:

- fonction d'une position client d'une interface positionnelle par rapport à une image du flux vidéo affiché par le terminal client en utilisant la résolution client adaptée,
- et proportionnelle au rapport entre une résolution de l'équipement et la résolution client adaptée.

Un objet de l'invention est également un terminal client comportant :

- un écran apte à afficher dans une fenêtre d'affichage un flux vidéo en utilisant une résolution client adaptée fourni par un équipement exécutant une application, et fournissant un flux vidéo affiché par le terminal client distinct de l'équipement,
- une interface utilisateur permettant de déplacer une interface positionnelle sur l'écran relativement à une image du flux vidéo,
- un dispositif d'interaction du terminal client avec l'équipement, comportant un transmetteur, vers l'équipement, d'une information de position adaptée comme paramètre d'entrée de position d'interaction de l'application, l'information de position adaptée étant:

  - fonction d'une position client d'une interface positionnelle par rapport à une image du flux vidéo affiché par le terminal client en utilisant la résolution client adaptée,
  - et proportionnelle au rapport entre une résolution de l'équipement et une résolution client adaptée.

Les caractéristiques et avantages de l'invention apparaîtront plus clairement à la lecture de la description, faite à titre d'exemple, et des figures s'y rapportant qui représentent :

- Figures 1a, 1b, et 1c, des schémas simplifiés du procédé d'interaction selon l'invention, respectivement dans le cadre général de l'exécution d'une application, d'une adaptation de position du procédé d'interaction, en combinaison avec un procédé d'adaptation d'affichage,
- Figure 2, un schéma simplifié d'un terminal client comportant un dispositif d'interaction selon l'invention.

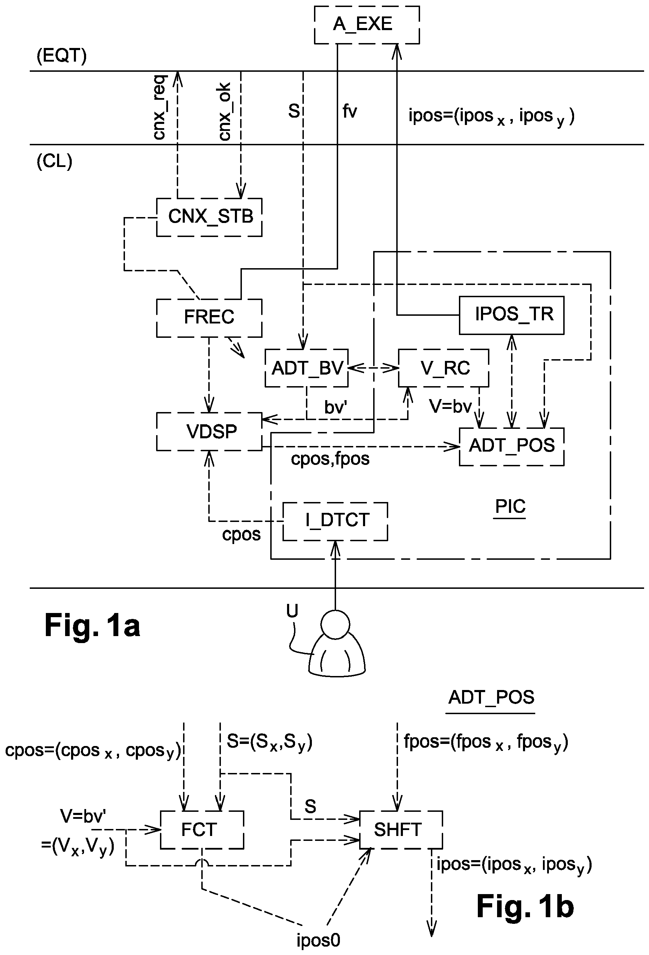

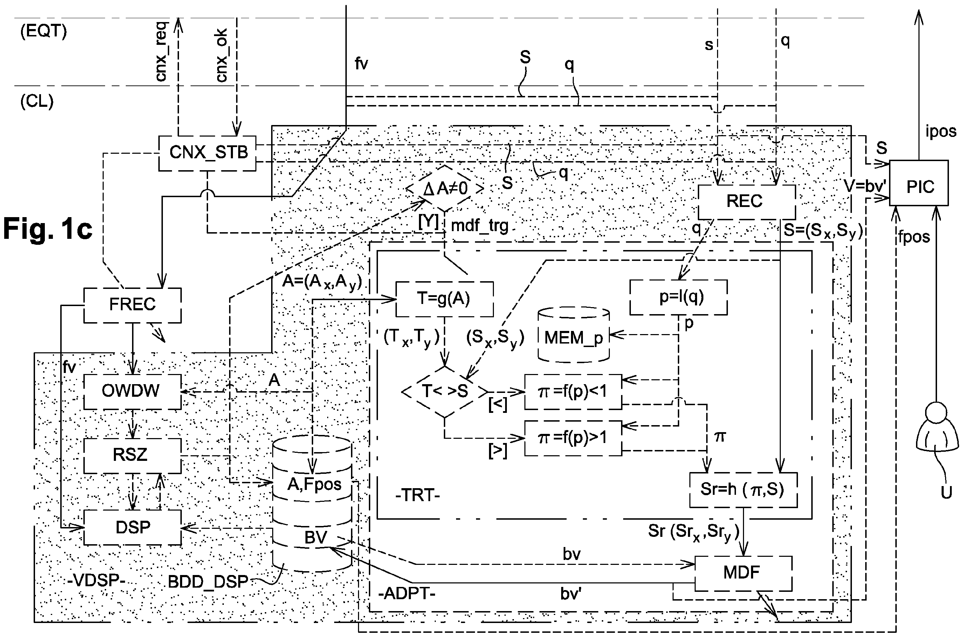

Les figures 1a, 1b, et 1c montrent des schémas simplifiés du procédé d'interaction selon l'invention. La figure 1a illustre, en particulier, le procédé d'interaction dans le cadre général de l'exécution d'une application.

Le procédé d'interaction PIC avec une application, exécutée par un équipement EQT, fournissant un flux vidéo fv affichée par un terminal client CL distinct de l'équipement, comporte une transmission IPOS_TR d'une information de position adaptée ipos comme paramètre d'entrée de position d'interaction de l'application. L'information de position adaptée ipos est fonction :

- d'une position client cpos d'une interface positionnelle par rapport à une image du flux vidéo fv,
- et proportionnelle au rapport entre une résolution de l'équipement S et une résolution client adaptée V.

Ainsi, les erreurs d'interaction lors de l'exécution distante d'une application sont évitées tout en limitant la charge de réseau et les coûts de calcul, et en conservant le caractère temps réel (en particulier, lorsque l'application est exécutée par un équipement distant du terminal client).

En particulier, le procédé d'interaction PIC comporte une adaptation ADT_POS de la position client cpos de l'interface positionnelle proportionnellement au rapport entre la résolution de l'équipement S et la résolution client adaptée V.

En particulier, le procédé d'interaction PIC comporte une adaptation ADT_POS de la position client cpos de l'interface positionnelle proportionnellement au rapport entre la résolution de l'équipement S et la résolution client adaptée V.

En particulier, le procédé d'interaction PIC comporte une récupération V_RC de la résolution client adaptée V, la résolution client adaptée V étant utilisée par le terminal client CL comme balise vidéo d'affichage bv'.

Notamment, le terminal client CL adapte son affichage en déterminant cette balise vidéo bv'. En particulier, un procédé d'adaptation ADT_BV d'affichage d'un flux vidéo *fv* par un client CL fournie comme balise vidéo bv' une résolution client adaptée V. La résolution client adaptée V est notamment fonction d'une résolution S d'un équipement EQT fournissant le flux vidéo *fv*, d'une taille T d'une fenêtre d'affichage du flux vidéo et d'un paramètre de précision *p*.

Ainsi, le coût de calcul est partagé entre l'affichage et l'interaction, permettant une réduction globale du coût de calcul client.

Soit, le procédé d'adaptation vidéo ADT_BV est intégré dans un procédé d'affichage VDSP: Le procédé d'affichage VDSP d'un flux vidéo *fv* par un client CL comporte alors l'adaptation ADT_BV d'un affichage du flux vidéo (non illustré).

Soit le procédé d'adaptation vidéo ADT_BV échange avec le procédé d'affichage VSDP (exemple illustré par la figure 1a), le procédé d'affichage VDSP fournissant la taille T de la fenêtre d'affichage et le procédé d'adaptation vidéo ADT_BV la balise vidéo modifiée bv' soit directement soit indirectement, par exemple par inscription dans une base de données d'affichage comportant la taille A de la fenêtre client dont est fonction la taille T de la fenêtre d'affichage, la balise vidéo BV, la position de la fenêtre d'affichage fpos...

En particulier, l'image fournie par l'exécution de l'application A_EXE est fournie dans un flux vidéo fv diffusée dans une session de communication Web temps réel.

En particulier, le procédé d'interaction PIC est mis en œuvre localement, lorsque l'application est exécutée A_EXE à distance.

En particulier, un procédé client de service de flux vidéo comporte un établissement CNX_STB d'une connexion du terminal client CL avec un équipement EQT fournissant des flux vidéo, voire fournissant le service de flux vidéo. Par exemple, l'établissement de connexion CNX_STB mis en œuvre par le terminal client CL envoie une requête de connexion *cnx_req* à l'équipement EQT déclenchant la connexion.

Notamment, la connexion n'est pas déclenchée tant que l'établissement CNX_STB d'une connexion n'a pas reçu un accord de connexion *cnx_ok* ou un accusé réception de demande de connexion (non illustré) en provenance de l'équipement EQT.

La connexion ou plus particulièrement l'établissement de la connexion CNX_STB déclenche le procédé d'interaction PIC selon l'invention et, éventuellement, la mise en œuvre du procédé d'adaptation vidéo ADT_BV.

Ainsi, tout déplacement de l'interface positionnelle la transmission IPOS_TR par le procédé d'interaction PIC d'une information position adaptée ipos au lieu de l'information de position cpos de l'interface position vers l'équipement EQT.

Une fois la connexion établie CNX_STB, le procédé client comporte une réception d'un flux vidéo FREC qui déclenche le procédé d'affichage VDSP pour afficher le flux vidéo *fv* reçu.

Un mode de réalisation particulier du procédé d'interaction PIC est un programme comprenant des instructions de code de programme pour l'exécution des étapes du procédé d'interaction selon l'une quelconque des revendications précédentes lorsque ledit programme est exécuté par un processeur.

La figure 1b illustre en particulier une adaptation de position du procédé d'interaction selon l'invention.

En particulier, l'adaptation de la position ADT_POS comporte une opération proportionnelle FCT fournissant une information de position adaptée ipos fonction de la position de l'interface positionnelle cpos et proportionnelle au rapport entre une résolution équipement S et une résolution client adaptée V.

Notamment, l'opération proportionnelle FCT effectue l'opération suivante : ipos = cpos (V-S) S/V.

En particulier, chaque dimension de la position adaptée iposx, iposy (dans le cas à deux dimensions) est égale à une dimension correspondante de la position client cposx, cposy multipliée par la dimension correspondante de la résolution équipement Sx, Sy multipliée par 1 auquel a été soustraite la résolution équipement Sx, Sy divisée par la résolution client adaptée Vx, Vy.

$$iposx = cposx\, Sx(1-Sx/Vx)$$

$$iposy = cposy\ Sy(1-Sy/Vy)$$

En particulier, l'adaptation de la position ADT_POS comporte une opération de décalage SHFT fournissant une information de position adaptée ipos recalée en fonction de la position de la fenêtre d'affichage fpos.

En particulier, l'information de position adaptée ipos est fonction de la position d'une fenêtre d'affichage client fpos relativement à un écran d'un terminal client affichant la fenêtre d'affichage client.

Ainsi, l'adaptation de la position tient compte du fait que la position de l'interaction est décalée lorsque l'application n'est pas affichée sur la totalité de l'écran local.

Notamment, l'opération de décalage SHFT effectue l'opération suivante :ipos = ipos0 + cpos*fpos*S/V, où ipos0 est l'information de position adaptée avant le décalage, c'est-à-dire pour une fenêtre d'affichage positionnée au point d'origine de l'écran.

En particulier, chaque dimension de la position adaptée iposx, iposy est décalée positivement en fonction d'une dimension correspondante la position de la fenêtre d'affichage client fposx, fposy multipliée une dimension correspondante de la position client cposx, cposy multipliée par la dimension correspondante de la résolution équipement Sx, Sy divisée par la résolution client adaptée Vx, Vy.

$$iposx = iposx0 + cposx*fposx*Sx/Vx$$

$$iposy = iposy0 + cposy*fposy*\ Sy/Vy$$

Soit :

$$
\begin{aligned}
Iposx \quad &= cposx*Sx(1-Sx/Vx) + cposx*fposx*Sx/Vx \\
&= cposx*((Vx-Sx) + fposx\ )*Sx/Vx
\end{aligned}
$$

$$
\begin{aligned}
Iposy \quad &= cposy*Sy(1-Sy/Vy) + cposy*fposy*\ Sy/Vy \\
&= cposy*((Vy-Sy) + fposy\ )*Sy/Vy
\end{aligned}
$$

Cela est généralisable à un nombre de dimension supérieur à 2, en particulier à 3 dimensions. Dans le cas à 3 dimensions, la fenêtre d'affichage ne sera plus plan mais à trois dimensions, et le dispositif de reproduction ne sera pas nécessairement un écran mais aura néanmoins un point d'origine dans un espace d'affichage à 3 dimensions.

La figure 1c illustre, en particulier, un procédé d'interaction selon l'invention combiné avec un procédé d'adaptation d'affichage,

Comme la figure 1a, la figure 1c montre un procédé client mis en œuvre par un terminal client CL déclenchant l'exécution d'une application par un équipement.

En particulier, le procédé client de service de flux vidéo comporte un établissement CNX_STB d'une connexion du client CL avec un équipement EQT fournissant des flux vidéo, voire fournissant le service de flux vidéo. Par exemple, l'établissement de connexion CNX_STB mis en œuvre par le client CL envoie une requête de connexion *cnx_req* à l'équipement EQT déclenchant la connexion.

Notamment, la connexion n'est pas déclenchée tant que l'établissement CNX_STB d'une connexion n'a pas reçu un accord de connexion *cnx_ok* ou un accusé réception de demande de connexion (non illustré) en provenance de l'équipement EQT.

La connexion ou plus particulièrement l'établissement de la connexion CNX_STB déclenche mdf_trg en parallèle la mise en œuvre d'un procédé d'adaptation Video ADT_BV et/ou de la modification MDF de la balise vidéo. Dans le cas où c'est la modification MDF qui est déclenchée, la modification MDF comporte le traitement TRT (non illustré) ou déclenche ce traitement TRT.

La résolution S et/ou la qualité q de l'équipement EQT est reçu REC soit par le procédé client, soit au sein du procédé d'adaptation ADPT. En particulier, l'établissement de la connexion CNX_STB récupère auprès de l'équipement EQT la résolution S et/ou la qualité q et les fournissent au procédé d'adaptation ADPT.

Une fois la connexion établie CNX_STB, le procédé client comporte une réception d'un flux vidéo FREC qui déclenche le procédé d'affichage VDSP pour afficher le flux vidéo *fv* reçu.

En particulier, la résolution client adaptée V=bv' est fonction d'une résolution équipement S, la résolution équipement S étant une résolution d'un équipement EQT exécutant l'application et fournissant la flux vidéo fv résultant, d'une taille d'une fenêtre d'affichage T du flux vidéo et d'un paramètre de précision q, la résolution client adaptée V ayant une même relation que la résolution équipement S à la taille de la fenêtre d'affichage T dans laquelle le flux vidéo est affiché par un terminal client.

Ainsi, l'adaptation de l'interaction tient compte de la nécessité d'adaptation de l'affichage local. En particulier, le fait que l'affichage d'un flux vidéo temps réel peut être redimensionné tout en conservant le caractère temps réel, sans déformation et sans perte de qualité lors de l'affichage de la vidéo portée par le flux vidéo. Le paramètre de précision permet notamment de conserver le radio de la vidéo d'origine 4 :3, 16 :9, etc.

Le procédé d'adaptation vidéo ADT_BV d'affichage d'un flux vidéo *fv* par un client CL comporte, par exemple, une modification MDF d'une balise vidéo BV du client CL. La balise vidéo modifiée V = *bv'* est ainsi fonction d'une résolution S d'un équipement EQT fournissant le flux vidéo *fv*, d'une taille T d'une fenêtre d'affichage du flux vidéo et d'un paramètre de précision *p*. La balise vidéo modifiée *bv'* a une même relation que la résolution S à la taille T de la fenêtre d'affichage dans laquelle le flux vidéo est affiché par le client.

Dans le cas d'un affichage en deux dimensions, la résolution de l'équipement est en deux dimensions S=(Sx,Sy), et la taille de la fenêtre d'affichage aussi T=(Tx,Ty).

En particulier, le procédé d'adaptation comporte, suite à une réception REC d'au moins la résolution S de l'équipement EQT fournissant le flux vidéo *fv*, un traitement TRT de ladite résolution S en fonction du paramètre de précision *p*, la résolution résultante du traitement Sr étant utilisée dans l'étape de modification MDF de balise vidéo.

En particulier, la balise vidéo modifiée bv' est proportionnelle à la résolution S : bv'=($\pi$ Sx, $\pi$ Sy), où $\pi$ est un facteur de proportion fonction du paramètre de précision p : $\pi$ = f(p).

Notamment, la résolution résultante Sr servant à modifier MDF la balise vidéo est proportionnelle à la résolution S: Sr'=h($\pi$, S), où $\pi$ est un facteur de proportion fonction du paramètre de précision p: $\pi$ = f(p) permettant de conserver le ratio de la résolution de l'équipement.

En particulier, la modification MDF est mise en œuvre lorsqu'au moins une des dimensions de la taille de la fenêtre d'affichage du client est inférieure à l'une des dimensions de la résolution (T<>S = [<]). Par exemple, si Tx < Sx ou Ty< Sy alors la modification MDF est mise en œuvre.

Notamment, le procédé d'adaptation comporte une vérification de la relation de la résolution par rapport à la taille T<>S. Lorsque la relation est [<] : la taille T est inférieure à la résolution S, en particulier dans au moins l'une des leurs dimensions, la vérification T<>S déclenche la modification MDF de la balise vidéo.

Dans ce cas d'une relation d'infériorité [<], le facteur de proportion $\pi$ est, par exemple, inférieur à 1.

En particulier, dans ce cas d'une relation d'infériorité [<], chaque dimension de la balise vidéo modifiée (bv'x,bv'y) est égale à la dimension correspondante de la résolution (Sx, Sy) multipliée par le paramètre de précision auquel a été soustrait 1 (p-1), et divisée par le paramètre de précision *p* :

si Tx < Sx ou Ty< Sy,
alors bv'x=(p-1)Sx/p et bv'y=(p-1)Sy/p
soit bv'x= $\pi$ Sx et bv'y= $\pi$ Sy avec $\pi$=f_(p)= (p-1)/p

En particulier, la modification MDF est mise en œuvre lorsqu'au moins une des dimensions de la taille de la fenêtre d'affichage du client est supérieure à l'une des dimensions de la résolution (T<>S = [>]). Par exemple, si Tx> Sx ou Ty> Sy alors la modification MDF est mise en œuvre.

Notamment, le procédé d'adaptation comporte une vérification de la relation de la résolution par rapport à la taille T<>S. Lors que la relation est [>]: la taille T est supérieure à la résolution S, en particulier dans au moins l'une des leurs dimensions, la vérification T<>S déclenche la modification MDF de la balise vidéo.

Dans ce cas d'une relation de supériorité [>], le facteur de proportion $\pi$ est, par exemple, supérieur à 1.

En particulier, dans ce cas d'une relation de supériorité[>], chaque dimension de la balise vidéo modifiée (bv'x,bv'y) est égale à la dimension correspondante de la résolution (Sx, Sy) multipliée par le paramètre de précision auquel a été soustrait 1 (p+1), et divisée par le paramètre de précision *p* :

si Tx> Sx ou Ty> Sy,
alors bv'x=(p+1)Sx/p et bv'y=(p+1)Sy/p
soit bv'x= $\pi$ Sx et bv'y= $\pi$ Sy avec $\tau$=f_+(p)=(p+1)/p

En particulier, le paramètre de précision est un paramètre prédéfini, par exemple dans une fourchette de 95 à 1000. Notamment, le paramètre de précision peut être fixé à 100 quel que soit l'équipement EQT fournissant un flux vidéo avec une qualité VGA de l'ordre de 720 pixels, mais aussi de l'ordre de 1080p, ou encore pour des qualités moins courantes, telles que 4 :3.

L'optimisation de l'affichage à la fois en termes de taille, de déformation et de qualité d'affichage semble obtenue pour un paramètre de précision p fixé à une valeur d'environ 100. Pour augmenter la qualité de l'affichage, le paramètre de précision p sera fixé à une valeur supérieure, notamment à 1000.

Notamment, le paramètre de précision *p* prédéfini est lu d'une mémoire MEM_p.

En particulier, le paramètre de précision *p* est fonction de la qualité q du flux vidéo *fv* : p=l(q). Ainsi, la modification MDF est aussi fonction de la qualité *q* du flux vidéo *fv*. Ainsi, la modification ne sera pas la même en fonction de la qualité de l'équipement EQT fournissant le flux vidéo *fv* : Par exemple, pour un premier équipement EQT1 de qualité VGA 720p, le paramètre de précision *p* prendra une valeur de 100 et pour un deuxième équipement EQT2 de qualité 4K, le paramètre de précision *p* passera automatiquement à une autre valeur, par exemple 4000.

Un mode de réalisation du procédé d'adaptation vidéo ADT_BV est un programme comprenant des instructions de code de programme pour l'exécution des étapes du procédé d'adaptation lorsque ledit programme est exécuté par un processeur.

Soit, le procédé d'adaptation Video ADT_BV est intégré dans un procédé d'affichage VDSP: Le procédé d'affichage VDSP d'un flux vidéo *fv* par un client CL comporte alors l'adaptation ADAPT d'un affichage du flux vidéo. L'adaptation ADAPT met en œuvre une modification MDF d'une balise vidéo bv du client CL. La balise vidéo modifiée bv' est fonction d'une résolution S d'un équipement EQT fournissant le flux vidéo *fv,* d'une taille T d'une fenêtre d'affichage du flux vidéo et d'un paramètre de précision *p*. La balise vidéo modifiée *bv'* a une même relation que la résolution S à la taille S de la fenêtre d'affichage dans laquelle le flux vidéo est affiché par le client.

Soit le procédé d'adaptation Video ADT_BV échange avec le procédé d'affichage VSDP (exemple non illustré), le procédé d'affichage fournissant la taille T de la fenêtre d'affichage et le procédé d'adaptation la balise vidéo modifiée bv' soit directement soit indirectement, par exemple par inscription dans une base de données d'affichage BDD_A comportant la taille A de la fenêtre client dont est fonction la taille T de la fenêtre d'affichage, la balise vidéo BV, ...

En particulier, le procédé d'affichage comporte une ouverture de la fenêtre d'affichage OWDW dans laquelle le flux vidéo *fv* reçu par le client CL sera affichée. Notamment, l'ouverture de la fenêtre lit la taille de la fenêtre client A, soit A=(Ax,Ay) pour un affichage en deux dimension, dans une base de données d'affichage BDD_A .

En particulier, le procédé d'affichage comporte un affichage DSP de la vidéo portée par le flux vidéo *fv* reçu par le client CL en fonction de la balise vidéo, notamment la balise vidéo BV lue dans une base de données d'affichage BDD_A ou directement fournie bv' par le procédé d'adaptation ADPT.

En particulier, le procédé d'affichage comporte une modification de la taille de la fenêtre d'affichage RSZ préalablement ou pendant l'affichage DSP. La nouvelle taille A de la fenêtre client et/ou la nouvelle taille M du menu du client et/ou la nouvelle taille W du menu du service mis en œuvre par l'équipement EQT fournissant le flux vidéo *fv* sont soit fournies directement au procédé d'adaptation Video ADT_BV, soit inscrit dans une base de données d'affichage BDD_A.

En particulier, une détection de changement de taille ΔA#0 ? déclenche *mdf_trg* soit, de manière générale, l'adaptation ADPT, soit, plus particulièrement, la modification MDF. Dans le cas où c'est la modification MDF qui est déclenchée, la modification MDF comporte le traitement TRT (non illustré) ou déclenche ce traitement TRT.

Par exemple, la détection de changement de taille ΔA#0 ? est intégrée soit dans l'adaptation vidéo ADT_BV (non illustré), soit dans le procédé d'affichage VSDP. Notamment, la détection de changement de taille ΔA#0 ? comporte une surveillance de la fenêtre d'affichage et/ou de la modification de taille RSZ et/ou de la taille A inscrite dans la base de données d'affichage BDD_A.

En particulier, la taille de la fenêtre d'affichage T servant à l'adaptation vidéo ADT_BV est fonction de la taille de la fenêtre client A : T=g(A). Notamment, lorsque certains menus sont utiles lors d'un affichage vidéo, il peut être envisagé que l'affichage ne se fasse pas sur la totalité de la fenêtre client mais seulement une partie de la fenêtre client laissant de l'espace à l'affichage d'un ou plusieurs menus tels que le menu du client et/ou le menu du service de flux vidéo. Alors la taille T de la fenêtre d'affichage correspond à la taille de la fenêtre client A diminué de la taille du menu client M et/ou de la taille du menu du service W, soit en cas d'affichage en deux dimensions : Tx=Ax-Mx-Wx et Ty=Ay-My-Wy.

Un mode de réalisation du procédé d'affichage VDSP est un programme comprenant des instructions de code de programme pour l'exécution des étapes du procédé d'affichage lorsque ledit programme est exécuté par un processeur.

En particulier, le procédé d'interaction PIC reçoit ou récupère la résolution client adaptée V servant comme balise vidéo bv' pour l'affichage du flux vidéo provenant de l'exécution de l'application.

Ainsi, lorsqu'un utilisateur U modifie la position de l'interface positionnelle cpos au moyen notamment d'une interface utilisateur tel qu'une manette, une souris, un stylet..., le procédé d'interaction PIC transmet une information de position adaptée ipos à l'équipement EQT pour interagir avec l'application. Soit le procédé d'interaction PIC comporte l'adaptation de la position ADT_POS (comme illustré figure 1a), soit le procédé d'interaction PIC commande un calculateur apte à effectuer l'adaptation de position ADT_POS et à lui fournir l'information de position adaptée ipso résultante.

Le procédé d'interaction PIC et/ou l'adaptation de position ADT_POS récupère ou reçoit les éléments nécessaires à cette adaptation de position, tel que la résolution client adaptée V reçu de l'adaptation vidéo ADT_BV ou récupérée dans la balise vidéo du dispositif d'affichage du terminal client ou dans une base de données d'affichage BDD_DSP, la résolution équipement S provenant de la réception REC, la position de la fenêtre d'affichage fpos récupérée dans les paramètres du dispositif d'affichage du terminal client ou dans une base de données d'affichage BDD_DSP...

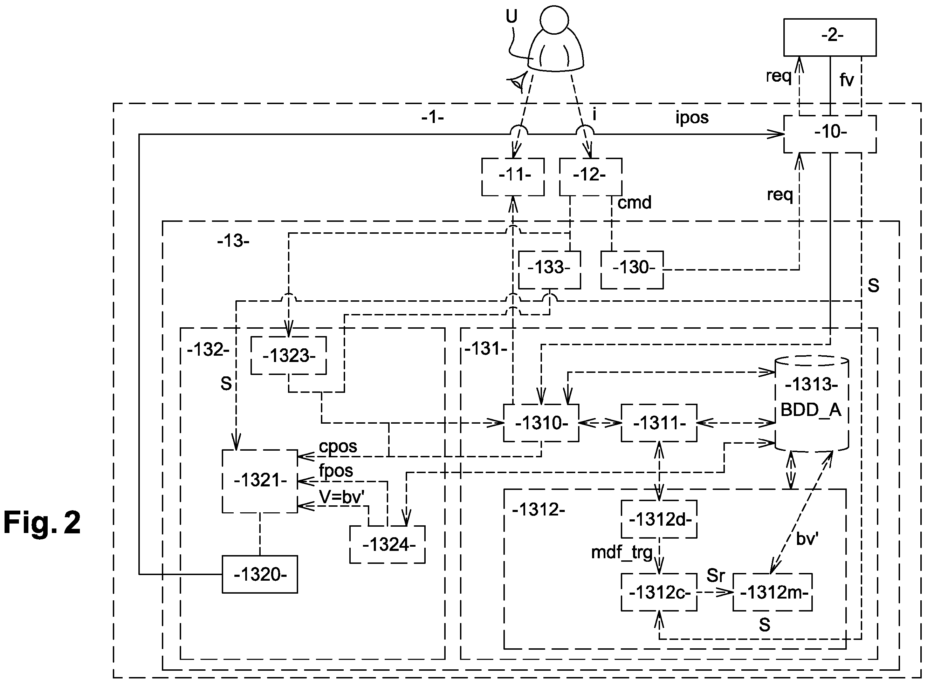

La figure 2 illustre un schéma simplifié d'un terminal client 1 comportant un dispositif d'interaction 132 selon l'invention.

Le dispositif d'interaction 132 d'un terminal client 1 avec un équipement 2 exécutant une application et fournissant un flux vidéo fv affichée par le terminal client 1 distinct de l'équipement 2, comporte un transmetteur 1320, vers l'équipement 2, d'une information de position adaptée ipos comme paramètre d'entrée de position d'interaction de l'application, l'information de position adaptée étant fonction :

- d'une position client cpos d'une interface positionnelle par rapport à une image du flux vidéo fv,
- et proportionnelle au rapport entre une résolution de l'équipement S et une résolution client adaptée V=bv'.

En particulier, le dispositif d'interaction 132 comporte un adaptateur de position 1321 fournissant l'information de position adaptée ipos au transmetteur 1320. L'adaptateur de position 1321 effectue le calcul de l'information de position adaptée ipos en fonction :

- de la position client cpos de l'interface positionnelle par rapport à une image du flux vidéo fv,
- et proportionnellement au rapport entre la résolution de l'équipement S et la résolution client adaptée V=bv'.

En particulier, le dispositif d'interaction 132 comporte une interface utilisateur 1323 manipulée directement ou indirectement par l'utilisateur U, tel qu'une manette de jeu, une souris, une caméra de détection de position de l'utilisateur, un stylet... fournissant la position client cpos.

En particulier, le dispositif d'interaction 132 comporte un récepteur 1324 recevant ou lisant dans une base de données ou des paramètres de la fenêtre d'affichage la résolution client adaptée V= bv', et éventuellement la position de la fenêtre d'affiche fpos.

En particulier, un dispositif client 13 comporte le dispositif d'interaction 132, ainsi qu'un dispositif d'affichage 131. Soit le dispositif client 13, soit le dispositif d'interaction 132 comporte l'interface utilisateur respectivement 133, 1323 permettant à l'utilisateur U d'interagir avec l'application et fournissant la position client cpos.

Le dispositif d'affichage 131 d'un flux vidéo *fv* dans une fenêtre d'un dispositif client 13 comporte un adaptateur 1312 de l'affichage du flux vidéo. L'adaptateur 1312 modifie une balise vidéo du client. La balise vidéo modifiée est fonction d'une résolution d'un équipement 2 fournissant le flux vidéo (tel qu'un serveur de streaming vidéo), d'une taille d'une fenêtre d'affichage du flux vidéo et d'un paramètre de précision. La balise vidéo modifiée a une même relation que la résolution à la taille de la fenêtre d'affichage dans laquelle le flux vidéo est affiché par le client.

En particulier, l'adaptateur 1312 comporte un module de modification 1312m de la balise vidéo en fonction d'une résolution d'un équipement 2 fournissant le flux vidéo (tel qu'un serveur de streaming vidéo), d'une taille d'une fenêtre d'affichage du flux vidéo et d'un paramètre de précision. Le module de modification 1312m fournit la balise vidéo modifiée bv' au dispositif d'affichage 131 directement (non illustré) ou indirectement, notamment en l'inscrivant dans une base de données d'affichage 1313.

En particulier, l'adaptateur 1312 comporte un module de traitement 1312c intégré (non illustré) ou non dans le module de modification 1312m. Le module de traitement 1312c reçoit ou récupère la résolution S de l'équipement 2, directement ou indirectement auprès de l'équipement 2 notamment au moyen de l'émetteur/récepteur 10 d'un terminal 1 comportant le dispositif client 13. Le module de traitement 1312c calcule une résolution résultante Sr fonction de la résolution S de l'équipement 2, d'un paramètre de précision p et de la taille de la fenêtre d'affichage T. Le module de traitement 1312c fournit la résolution résultante Sr au module de modification 1312m.

En particulier, l'adaptateur 1312 comporte un module de surveillance 1312d surveillant la fenêtre d'affichage, en particulier la taille de la fenêtre d'affichage. Le module de surveillance 1312d déclenche, directement ou non, le module de modification 1312m lors d'une modification de la fenêtre de surveillance. Soit le module de surveillance 1312d déclenche le module de calcul 1312c qui déclenche le module de modification en fournissant la résolution résultante Sr. Soit le module de surveillance 1312d déclenche le module de traitement 1312m qui déclenche éventuellement le module de traitement 1312m. Etc.

En particulier, le dispositif d'affichage 131 comporte un module d'affichage 1310 recevant le flux vidéo fv et affichant la vidéo portée par ce flux vidéo dans la fenêtre d'affichage du client en fonction au moins d'une balise vidéo bv lue notamment dans une base de données d'affichage 1313. Ainsi, lorsque la balise vidéo inscrite dans la base de données 1313 est la balise vidéo modifiée inscrite par l'adaptateur 1312, l'affichage de la vidéo est optimisé en termes de taille, de déformation et de qualité.

En particulier, le dispositif d'affichage 131 comporte un module de gestion de fenêtre client 1311. Les modules d'affichage 1310 et de gestion de fenêtre 1311 échange de tel sorte que la vidéo portée par le flux soit affichée dans la zone de la fenêtre dédié à l'affichage de la vidéo. Notamment, le dispositif de gestion de fenêtre 1311 lit et/ou inscrit la taille de la fenêtre client A et/ou la taille du menu client M et/ou la taille du menu du service W de/dans la base de données 1313.

En particulier, un client 13 apte à afficher des flux vidéo *fv* comporte l'adaptateur 1312 de l'affichage du flux vidéo. Notamment, le client 13 comporte le dispositif d'affichage 131 comportant l'adaptateur 1312.

En particulier, le client 13 comporte un module de requête 130 recevant des commandes cmd d'interaction d'un utilisateur U avec un terminal 1 et émettant des requêtes req vers au moins un dispositif de flux vidéo 2, tel qu'un serveur de streaming vidéo. Les requêtes req sont notamment des requêtes de connexion au dispositif de flux vidéo 2, et/ou des requêtes de catalogues de flux vidéo et/ou des requêtes de flux vidéo, etc. Ces requêtes sont notamment transmises au moyen de l'émetteur/récepteur 10 du terminal 1.

Les requêtes req sont notamment des requêtes de modification de la taille de la fenêtre client A par l'utilisateur U qui sont transmises au module de gestion de fenêtre 1311. En particulier, le module de surveillance 1312d de l'adaptateur 1312 échange et/ou surveille le module de gestion de fenêtre 1311 du dispositif d'affichage.

En particulier, un utilisateur U dispose d'un terminal U pour accéder à des vidéos proposées par un serveur distant 2 aussi nommé dispositif de fourniture de service de flux vidéo. Le terminal 1 est un terminal de communication comportant un émetteur/récepteur 10 permettant au terminal 1 d'échanger notamment avec le dispositif de fourniture de service de flux vidéo 2.

En particulier, le terminal 1 comporte un afficheur, tel qu'un écran, 11 et une interface utilisateur 12, tel que l'écran lorsqu'il est tactile ou un clavier, une souris, une caméra, un microphone, etc.

En particulier, un terminal client 1 comportant :

- un écran 11 apte à afficher dans une fenêtre d'affichage un flux vidéo fv fournie par un équipement 2 exécutant une application et fournissant un flux vidéo affiché par le terminal client distinct de l'équipement
- une interface utilisateur 12 permettant de déplacer une interface positionnelle sur l'écran 11 relativement à une image du flux vidéo fv,
- le dispositif d'interaction 132 avec l'équipement 2.

L'utilisateur U interagit avec l'interface utilisateur 12 notamment pour commander cmd la connexion du dispositif client 13, notamment intégré dans le terminal 1, avec le dispositif de fourniture de service de flux vidéo 2, puis, éventuellement, la diffusion d'un flux vidéo.

La vidéo portée par le flux vidéo émis par le dispositif de fourniture de service de flux vidéo 2 sera affiché sur l'écran 2 pour l'utilisateur U de manière optimale en termes de taille, déformation et qualité d'affichage car l'écran 2 est contrôlé par le dispositif d'affichage 131 comportant un adaptateur 1312 selon l'invention.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en œuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonction selon la description ci-dessous. Un composant matériel correspond à tout élément d'un ensemble matériel (ou hardware) apte à mettre en œuvre une fonction ou un ensemble de fonctions.

### Revendications

1. Procédé d'interaction d'un terminal client avec une application, exécutée par un équipement, fournissant un flux vidéo affiché en utilisant une résolution client adaptée par le terminal client distinct de l'équipement, le procédé d'interaction étant mis en œuvre par le terminal client et comportant :

   - une détermination d'une valeur de résolution client adaptée, dans laquelle la détermination est fonction de la résolution de l'équipement, et de la taille de la fenêtre d'affichage du terminal client dans laquelle le flux vidéo est affiché,
- un affichage du flux vidéo sur le terminal client en utilisant la résolution client adapté,
- une identification de l'information de position adaptée pour une image du flux vidéo affiché en utilisant la résolution client adapté comportant :
- une génération d'une information de position en fonction d'une position client d'une interface positionnelle par rapport à une image du flux vidéo affiché par le terminal client en utilisant la résolution client adaptée ;
- une adaptation de l'information de position générée, l'information de position adaptée étant

    • fonction d'une position client d'une interface positionnelle par rapport à une image du flux vidéo affiché par le terminal client en utilisant la résolution client adaptée, et
    • proportionnelle au rapport entre une résolution de l'équipement et la résolution client adaptée, la résolution de l'équipement correspondant à la résolution utilisée par l'équipement pour générer le flux vidéo,

    - une transmission, par le terminal client à l'équipement, de l'information de position adaptée comme paramètre d'entrée de position d'interaction de l'application.

**2.** Procédé d'interaction selon la revendication précédente, **caractérisé en ce que** le procédé comporte une adaptation de la position client de l'interface positionnelle proportionnellement au rapport entre la résolution de l'équipement et la résolution client adaptée.

**3.** Procédé d'interaction selon l'une quelconque des revendications précédentes, **caractérisé en ce que** le procédé d'interaction comporte une récupération de la résolution client adaptée, la résolution client adaptée étant utilisée par le terminal client dans une balise vidéo d'affichage.

**4.** Procédé d'interaction selon l'une quelconque des revendications précédentes, **caractérisé en ce que** $\{ipos_d = cpos_d *((V_d - S_d) + fpos_d) * S_d/V_d\}_{d=x,y...}$ dans laquelle d est un paramètre de dimension qui prend un nombre de valeur égal aux nombres de dimensions d'affichage et, pour une dimension d, $ipos_d$ correspond à une position adaptée, $cpos_d$ à une position client, $fpos_d$ à une position de la fenêtre d'affichage client, $S_d$ à une résolution équipement, et $V_d$ à une résolution client adaptée.

**5.** Procédé d'interaction selon l'une quelconque des revendications précédentes, **caractérisé en ce que** l'information de position adaptée est fonction, en outre, de la position d'une fenêtre d'affichage client relativement à un écran d'un terminal client affichant la fenêtre d'affichage client.

**6.** Procédé d'interaction selon la revendication précédente, **caractérisé en ce que** chaque dimension de la position adaptée est décalée positivement en fonction d'une dimension correspondante la position de la fenêtre d'affichage client multipliée une dimension correspondante de la position client multipliée par la dimension correspondante de la résolution équipement divisée par la résolution client adaptée.

**7.** Procédé d'interaction selon l'une quelconque des revendications précédentes, **caractérisé en ce que** l'image fournie par l'exécution de l'application est fournie dans un flux vidéo diffusée dans une session de communication Web temps réel.

**8.** Programme comprenant des instructions de code de programme pour l'exécution des étapes du procédé d'interaction selon l'une quelconque des revendications précédentes lorsque ledit programme est exécuté par un processeur.

**9.** Dispositif d'interaction d'un terminal client avec un équipement exécutant une application et fournissant un flux vidéo affiché en utilisant une résolution client adaptée par le terminal client distinct de l'équipement, la résolution client adaptée étant fonction de la résolution de l'équipement et de la taille de la fenêtre d'affichage du terminal client dans laquelle le flux vidéo est affiché, le dispositif d'interaction comportant

    - un calculateur d'une valeur de résolution client adaptée, dans laquelle la détermination est fonction de la résolution de l'équipement, et de la taille de la fenêtre d'affichage du terminal client dans laquelle le flux vidéo est affiché,
    - un afficheur du flux vidéo sur le terminal client en utilisant la résolution client adapté,
    - un identificateur de l'information de position adaptée pour une image du flux vidéo affiché en utilisant la résolution client adapté comportant :

- un générateur d'une information de position en fonction d'une position client d'une interface positionnelle par rapport à une image du flux vidéo affiché par le terminal client en utilisant la résolution client adaptée ;
- un adaptateur de l'information de position générée, l'information de position adaptée étant

• fonction d'une position client d'une interface positionnelle par rapport à une image du flux vidéo affiché par le terminal client en utilisant la résolution client adaptée, et
• proportionnelle au rapport entre une résolution de l'équipement et la résolution client adaptée,

- un transmetteur, vers l'équipement, d'une information de position adaptée comme paramètre d'entrée de position d'interaction de l'application.

**10.** Terminal client comportant :

• un écran apte à afficher dans une fenêtre d'affichage en utilisant une résolution client adaptée un flux vidéo fourni par un équipement exécutant une application, et fournissant un flux vidéo affiché par le terminal client distinct de l'équipement, la résolution client adaptée étant fonction de la résolution de l'équipement et de la taille de la fenêtre d'affichage du terminal client dans laquelle le flux vidéo est affiché,
• une interface utilisateur permettant de déplacer une interface positionnelle sur l'écran relativement à une image du flux vidéo,
• un dispositif d'interaction du terminal client avec l'équipement, comportant

◦ un calculateur d'une valeur de résolution client adaptée, dans laquelle la détermination est fonction de la résolution de l'équipement, et de la taille de la fenêtre d'affichage du terminal client dans laquelle le flux vidéo est affiché,
◦ un afficheur du flux vidéo sur le terminal client en utilisant la résolution client adapté,
◦ un identificateur de l'information de position adaptée pour une image du flux vidéo affiché en utilisant la résolution client adapté comportant :

◦ un générateur d'une information de position en fonction d'une position client d'une interface positionnelle par rapport à une image du flux vidéo affiché par le terminal client en utilisant la résolution client adaptée ;
◦ un adaptateur de l'information de position générée, l'information de position adaptée étant
➢ fonction d'une position client d'une interface positionnelle par rapport à une image du flux vidéo affiché par le terminal client en utilisant la résolution client adaptée, et
➢ proportionnelle au rapport entre une résolution de l'équipement et la résolution client adaptée,

◦ un transmetteur, vers l'équipement, d'une information de position adaptée comme paramètre d'entrée de position d'interaction de l'application.

**Patentansprüche**

**1.** Verfahren zur Interaktion eines Client-Endgeräts mit einer von einer Ausrüstung ausgeführten Anwendung, die unter Verwendung einer durch das von der Ausrüstung getrennte Client-Endgerät angepassten Client-Auflösung einen angezeigten Videostrom liefert, wobei das Interaktionsverfahren vom Client-Endgerät durchgeführt wird und aufweist:

- eine Bestimmung eines angepassten Client-Auflösungwerts, wobei die Bestimmung von der Auflösung der Ausrüstung und der Größe des Anzeigefensters des Client-Endgeräts abhängt, in dem der Videostrom angezeigt wird,
- eine Anzeige des Videostroms auf dem Client-Endgerät unter Verwendung der angepassten Client-Auflösung,
- eine Erkennung der angepassten Positionsinformation für ein Bild des angezeigten Videostroms unter Verwendung der angepassten Client-Auflösung, die aufweist:

- eine Generierung einer Positionsinformation abhängig von einer Client-Position einer Positions-Schnittstelle bezüglich eines Bilds des vom Client-Endgerät angezeigten Videostroms unter Verwendung der angepassten Client-Auflösung;

- eine Anpassung der generierten Positionsinformation, wobei die angepasste Positionsinformation

  • von einer Client-Position einer Positions-Schnittstelle bezüglich eines Bilds des vom Client-Endgerät angezeigten Videostroms unter Verwendung der angepassten Client-Auflösung abhängt, und
  • zum Verhältnis zwischen einer Auflösung der Ausrüstung und der angepassten Client-Auflösung proportional ist, wobei die Auflösung der Ausrüstung der von der Ausrüstung zur Generierung des Videostroms verwendeten Auflösung entspricht,

- eine Übertragung der angepassten Positionsinformation als Eingangsparameter der Interaktionsposition der Anwendung vom Client-Endgerät zur Ausrüstung.

2. Interaktionsverfahren nach dem vorhergehenden Anspruch, **dadurch gekennzeichnet, dass** das Verfahren eine Anpassung der Client-Position der Positions-Schnittstelle proportional zum Verhältnis zwischen der Auflösung der Ausrüstung und der angepassten Client-Auflösung aufweist.

3. Interaktionsverfahren nach einem der vorhergehenden Ansprüche, **dadurch gekennzeichnet, dass** das Interaktionsverfahren eine Wiedergewinnung der angepassten Client-Auflösung aufweist, wobei die angepasste Client-Auflösung vom Client-Endgerät in einem Anzeige-Video-Tag verwendet wird.

4. Interaktionsverfahren nach einem der vorhergehenden Ansprüche, **dadurch gekennzeichnet, dass**

$$\{ipos_d = cpos_d * ((V_d - S_d) + fpos_d) * S_d/V_d\}_{d=x,v...}$$

wobei d ein Abmessungsparameter ist, der eine Zahl eines Werts gleich den Zahlen von Anzeigeabmessungen annimmt, und für eine Abmessung d $ipos_d$ einer angepassten Position, $cpos_d$ einer Client-Position, $fpos_d$ einer Position des Client-Anzeigefensters, $S_d$ einer Ausrüstungsauflösung und $V_d$ einer angepassten Client-Auflösung entspricht.

5. Interaktionsverfahren nach einem der vorhergehenden Ansprüche, **dadurch gekennzeichnet, dass** die angepasste Positionsinformation außerdem von der Position eines Client-Anzeigefensters bezüglich eines Bildschirms eines Client-Endgeräts abhängt, der das Client-Anzeigefenster anzeigt.

6. Interaktionsverfahren nach dem vorhergehenden Anspruch, **dadurch gekennzeichnet, dass** jede Abmessung der angepassten Position abhängig von einer entsprechenden Abmessung die Position des Client-Anzeigefensters multipliziert mit der entsprechenden Abmessung der Ausrüstungsauflösung dividiert durch die angepasste Client-Auflösung positiv versetzt ist.

7. Interaktionsverfahren nach einem der vorhergehenden Ansprüche, **dadurch gekennzeichnet, dass** das durch die Ausführung der Anwendung gelieferte Bild in einem Videostrom geliefert wird, der in einer Echtzeit-Web-Kommunikationssitzung verbreitet wird.

8. Programm, das Programmcodeanweisungen zur Ausführung der Schritte des Interaktionsverfahrens nach einem der vorhergehenden Ansprüche enthält, wenn das Programm von einem Prozessor ausgeführt wird.

9. Vorrichtung zur Interaktion eines Client-Endgeräts mit einer Ausrüstung, die eine Anwendung ausführt und einen angezeigten Videostrom liefert, indem sie eine durch das von der Ausrüstung getrennte Client-Endgerät angepasste Client-Auflösung verwendet, wobei die angepasste Client-Auflösung von der Auflösung der Ausrüstung und der Größe des Anzeigefensters des Client-Endgeräts abhängt, in dem der Videostrom angezeigt wird, wobei die Interaktionsvorrichtung aufweist:

  - einen Rechner eines angepassten Client-Auflösungswerts, wobei die Bestimmung von der Auflösung der Ausrüstung und der Größe des Anzeigefensters des Client-Endgeräts abhängt, in dem der Videostrom angezeigt wird,
  - einen Anzeiger des Videostroms auf dem Client-Endgerät unter Verwendung der angepassten Client-Auflösung,
  - einen Identifikator der angepassten Positionsinformation für ein Bild des angezeigten Videostroms unter Verwendung der angepassten Client-Auflösung, der aufweist:

- einen Generator einer Positionsinformation abhängig von einer Client-Position einer Positions-Schnittstelle bezüglich eines Bilds des vom Client-Endgerät angezeigten Videostroms unter Verwendung der angepassten Client-Auflösung;
- einen Adapter der generierten Positionsinformation, wobei die angepasste Positionsinformation

• von einer Client-Position einer Positions-Schnittstelle bezüglich eines Bilds des vom Client-Endgerät angezeigten Videostroms unter Verwendung der angepassten Client-Auflösung abhängt, und
• zum Verhältnis zwischen einer Auflösung der Ausrüstung und der angepassten Client-Auflösung proportional ist,

- einen Sender einer angepassten Positionsinformation als Eingangsparameter einer Interaktionsposition der Anwendung zur Ausrüstung.

10. Client-Endgerät, das aufweist:

• einen Bildschirm, der in einem Anzeigefenster unter Verwendung einer angepassten Client-Auflösung einen Videostrom anzeigen kann, der von einer eine Anwendung ausführenden Ausrüstung geliefert wird, und einen von dem von der Ausrüstung getrennten Client-Endgerät angezeigten Videostrom liefert, wobei die angepasste Client-Auflösung von der Auflösung der Ausrüstung und von der Größe des Anzeigefensters des Client-Endgeräts abhängt, in dem der Videostrom angezeigt wird,
• eine Benutzerschnittstelle, die es ermöglicht, eine Positions-Schnittstelle auf dem Bildschirm bezüglich eines Bilds des Videostroms zu verschieben,
• eine Interaktionsvorrichtung des Client-Endgeräts mit der Ausrüstung, die aufweist:

◦ einen Rechner eines angepassten Client-Auflösungswerts, wobei die Bestimmung von der Auflösung der Ausrüstung und von der Größe des Anzeigefensters des Client-Endgeräts abhängt, in dem der Videostrom angezeigt wird,
◦ einen Anzeiger des Videostroms auf dem Client-Endgerät unter Verwendung der angepassten Client-Auflösung,
◦ einen Identifikator der angepassten Positionsinformation für ein Bild des angezeigten Videostroms unter Verwendung der angepassten Client-Auflösung, der aufweist:

◦ einen Generator einer Positionsinformation abhängig von einer Client-Position einer Positions-Schnittstelle bezüglich eines Bilds des vom Client-Endgerät angezeigten Videostroms unter Verwendung der angepassten Client-Auflösung;
◦ einen Adapter der generierten Positionsinformation, wobei die angepasste Positionsinformation
➢ von einer Client-Position einer Positions-Schnittstelle bezüglich eines Bilds des vom Client-Endgerät angezeigten Videostroms unter Verwendung der angepassten Client-Auflösung abhängt, und
➢ proportional zum Verhältnis zwischen einer Auflösung der Ausrüstung und der angepassten Client-Auflösung ist,

◦ einen Sender einer angepassten Positionsinformation als Eingangsparameter einer Interaktionsposition der Anwendung zur Ausrüstung.

## Claims

1. Method for interaction from a client terminal with an application, executed by an equipment, supplying a video stream that is displayed using a client resolution adapted to the client terminal, which client terminal is distinct from the equipment, the method of interaction being implemented by the client terminal and comprising:

- determination of a adapted client resolution value, the determination being based on the resolution of the equipment, and on the size of the client terminal display window in which the video stream is displayed,
- display of the video stream on the client terminal using the adapted client resolution,

- identification of adapted position information for an image of the video stream as displayed using the adapted client resolution, this comprising:

- generation of position information depending on a client position of a positional interface with respect to an image of the video stream displayed by the client terminal using the adapted client resolution;
- adaptation of the generated position information, the adapted position information being

• dependent on a client position of a positional interface with respect to an image of the video stream displayed by the client terminal using the adapted client resolution, and
• proportional to the ratio between a resolution of the equipment and the adapted client resolution, the resolution of the equipment corresponding to the resolution used by the equipment to generate the video stream,

- transmission, by the client terminal to the equipment, of the adapted position information as an interaction position input parameter for the application.

2. Method of interaction according to the preceding claim, **characterized in that** the method comprises an adaptation of the client position of the positional interface in proportion to the ratio between the resolution of the equipment and the adapted client resolution.

3. Method of interaction according to either one of the preceding claims, **characterized in that** the method of interaction comprises retrieving the adapted client resolution, the adapted client resolution being used by the client terminal in a display video tag.

4. Method of interaction according to any one of the preceding claims, **characterized in that** $\{ipos_d = cpos_d * ((V_d-S_d) +fpos_d) * S_d/V_d\}_{d=X,V...}$, in which d is a dimensional parameter that takes a number of value equal to the number of display dimensions and, for a dimension d, $ipos_d$ corresponds to an adapted position, $cpos_d$ to a client position, $fpos_d$ to a position of the client display window, $S_d$ to an equipment resolution, and $V_d$ to a adapted client resolution.

5. Method of interaction according to either one of the preceding claims, **characterized in that** the adapted position information is furthermore function of the position of a client display window relative to a screen of a client terminal displaying the client display window.

6. Method of interaction according to the preceding claim, **characterized in that** each dimension of the adapted position is positively shifted as a function of a corresponding dimension the position of the client display window multiplied by the corresponding dimension of the equipment resolution divided by the adapted client resolution.

7. Method of interaction according to either one of the preceding claims, **characterized in that** the image supplied by the execution of the application is supplied within a video stream broadcast in a Web Real-Time Communication session.

8. Program containing program-code instructions for executing the steps of the method of interaction according to any one of the preceding claims when said program is executed by a processor.

9. Device for interaction of a client terminal with an equipment executing an application and supplying a video stream displayed using a client resolution adapted to the client terminal, which client terminal is distinct from the equipment, the adapted client resolution being based on the resolution of the equipment and on the size of the client terminal display window in which the video stream is displayed, the interaction device comprising

- a computer for determining an adapted client resolution value, wherein the determination is based on the resolution of the equipment, and on the size of the client terminal display window in which the video stream is displayed,
- a display for displaying the video stream on the client terminal using the adapted client resolution,
- an identifier for identifying adapted position information for an image of the video stream as displayed using the adapted client resolution comprising:

- a generator for generating position information depending on a client position of a positional interface with respect to an image of the video stream displayed by the client terminal using the adapted client resolution;

- an adaptor for adapting the generated position information, the adapted position information being

• dependent on a client position of a positional interface with respect to an image of the video stream displayed by the client terminal using the adapted client resolution, and
• proportional to the ratio between a resolution of the equipment and the adapted client resolution,

- a transmitter for transmitting, to the equipment, adapted position information as an interaction position input parameter for the application.

**10.** Client terminal comprising:

• a screen able to display, in a display window, using a adapted client resolution, a video stream supplied by an equipment executing an application, and supplying a video stream displayed by the client terminal, which client terminal is distinct from the equipment, the adapted client resolution being based on the resolution of the equipment and on the size of the client terminal display window in which the video stream is displayed,
• a user interface allowing a positional interface to be moved over the screen relative to an image of the video stream,
• a device for interaction of the client terminal with the equipment, comprising

- a computer for determining an adapted client resolution value, wherein the determination is based on the resolution of the equipment, and on the size of the client-terminal display window in which the video stream is displayed,
- a display for displaying the video stream on the client terminal using the adapted client resolution,
- an identifier for identifying adapted position information for an image of the video stream as displayed using the adapted client resolution comprising:

- a generator for generating position information depending on a client position of a positional interface with respect to an image of the video stream displayed by the client terminal using the adapted client resolution;
- an adaptor for adapting the generated position information, the adapted position information being

• dependent on a client position of a positional interface with respect to an image of the video stream displayed by the client terminal using the adapted client resolution, and
• proportional to the ratio between a resolution of the equipment and the adapted client resolution,

- a transmitter for transmitting, to the equipment, adapted position information as an interaction position input parameter for the application.

**Fig. 1a**

**Fig. 1b**

**Fig. 1c**

Fig. 2

EP 3 224 710 B1

18

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8774536 B1
- US 2012011445 A1
- US 2011314093 A1